# EUROPÄISCHE PATENTSCHRIFT

(11) **EP 2 356 171 B1**
(45) Veröffentlichungstag und Bekanntmachung des Hinweises auf die Patenterteilung: **26.11.2014**
(21) Anmeldenummer: 09768049.0
(22) Anmeldetag: 08.12.2009
(51) Int. Cl.: C08G 77/452, C08G 77/458, C08G 77/46, C08L 83/08, C08L 83/12, D06M 15/643, D06M 15/647

(54) **SILOXANCOPOLYMERE UND VERFAHREN ZU DEREN HERSTELLUNG**
SILOXANE COPOLYMERS AND METHODS FOR PRODUCTION THEREOF
COPOLYMÈRES DE SILOXANE ET LEUR PROCÉDÉ DE PRÉPARATION

(30) Priorität: 09.12.2008 DE 102008054434
(43) Veröffentlichungstag der Anmeldung: 17.08.2011
(73) Patentinhaber: Wacker Chemie AG, 81737 München (DE)
(72) Erfinder: MESSNER, Michael, 01665 Semmelsberg (DE); HOFFMANN, Sabine, 01445 Radebeul (DE); MOLDENHAUER, Jens-Peter, 84489 Burghausen (DE)
(74) Vertreter: Deffner-Lehner, Maria
(86) Internationale Anmeldenummer: PCT/EP2009/066612
(87) Internationale Veröffentlichungsnummer: WO 2010/066722

(56) Entgegenhaltungen:
- EP-A1- 1 607 427
- US-A1- 2008 200 608

## Beschreibung

Die Erfindung betrifft Siloxancopolymere, insbesondere hydrophile Siloxancopolymere, und ein Verfahren zu ihrer Herstellung.

US 7,927,648 beschreibt hydrophile Siloxancopolymere, die durch Umsetzung von Siloxan-Polyether-Copolymere mit Diisocyanat in Gegenwart eines tertiären Amins und anschließender Alkylierung der Amingruppen erhalten werden. Diese Siloxancopolymere bzw. deren Emulsionen eignen sich als hydrophile Weichmacher für textile Flächengebilde, wobei die Emulsionen im basischen Milieu beständig sind und unter den Bedingungen moderner Jet-Applikationen, d.h. unter dem Einfluss von Scherkräften, stabil sind. Die Waschbeständigkeit des hydrophilisierenden und weichmachenden Effekts ist aber entscheidend für den Gebrauchswert einer Weichgriffausrüstung. Die in der US 7,427,648 beschriebenen hydrophilen Siloxancopolymere stellen in dieser Hinsicht zwar eine Verbesserung gegenüber dem dort beschriebenen damaligen Stand der Technik dar, vermögen hinsichtlich ihrer Waschpermanenz aber nicht zu befriedigen.

Es bestand die Aufgabe Siloxancopolymere bereitzustellen, die textilen Flächengebilden einen guten Weichgriff und eine verbesserte Waschpermanenz verleihen. Die Aufgabe wird durch die Erfindung gelöst.

Gegenstand der Erfindung sind Siloxancopolymere herstellbar indem
(a) in einem ersten Schritt
   Organopolysiloxane (1), die pro Molekül mindestens ein Si-gebundenes Wasserstoffatom, vorzugsweise mindestens zwei Si-gebundene Wasserstoffatome, aufweisen, mit
   weitgehend linearen oligomeren oder polymeren Verbindungen (2) der allgemeinen Formel

   R¹- (A-CₙH₂ₙ)ₘ-A¹-H (I),

   wobei R¹ einen einwertigen gegebenenfalls substituierten Kohlenwasserstoffrest bedeutet, an den Si-H-Gruppen in einer Hydrosilylierungsreaktion angelagert werden können, vorzugsweise einen aliphatische C-C-Mehrfachbindung aufweisenden Kohlenwasserstoffrest bedeutet,
   A einen zweiwertigen, polaren organischen Rest ausgewählt aus der Gruppe von -O- -C(O)-O-, -O-C(O)- , -O-C(O)-O- , -C(O)-NH- , -NH-C(O)- , Urethanrest und Harnstoffrest, vorzugsweise ein Sauerstoffatom -O-, bedeutet,
   A¹ einen zweiwertigen, polaren organischen Rest ausgewählt aus der Gruppe von -O- , -NH- und -NR'- (wobei R' einen einwertigen Kohlenwasserstoffrest mit 1 bis 18 Kohlenstoffatomen bedeutet), vorzugsweise ein Sauerstoffatom -O-, bedeutet,
   n eine ganze Zahl von 1 bis 20, vorzugsweise 1 bis 4, bevorzugt 2 oder 3, ist und
   m gleich 0 oder eine ganze positive Zahl, vorzugsweise 5 bis 50, ist,
   umgesetzt werden,
(b) in einem zweiten Schritt
   die so erhaltenen H-A¹-Gruppen aufweisenden Zwischenprodukte (4) mit organischen Verbindungen (5), die pro Molekül mindestens zwei Isocyanatgruppen aufweisen, umgesetzt werden, wobei die Umsetzung in Anwesenheit von weiteren organischen Verbindungen (6)und (7), welche gegenüber Isocyanatgruppen reaktiv sind, stattfindet,
   mit der Maßgabe, dass die Verbindungen (6) mindestens eine tertiäre Amingruppe enthalten,
   und dass die Verbindungen (7) solche sind, die in einem Temperaturbereich von 50°C bis 250°C, vorzugsweise 100°C bis 200°C, wieder vom Siloxancopolymer abgespalten werden können, wobei wieder freie Isocyanatgruppen im Siloxancopolymer entstehen, und
(c) in einem dritten Schritt
   die Amingruppen-haltigen Zwischenprodukte (8) aus Schritt (b) mit einem Alkylierungsmittel (9) teilweise oder vollständig quaterniert werden,
   mit der Maßgabe, dass der Wassergehalt der zur Herstellung der Siloxancopolymere eingesetzten Verbindungen (1) und (2) niedriger ist als 2000 Gew.-ppm, vorzugsweise niedriger ist als 1500 Gew.-ppm, bevorzugt niedriger ist als 1000 Gew.-ppm, jeweils bezogen auf das Gesamtgewicht von Verbindungen (1) und (2).

Der Wassergehalt bezieht sich auf Raumtemperatur (20°C) und dem Druck der umgebenden Atmosphäre (1020 hPa).

Die erfindungsgemäßen Siloxancopolymere sind vorzugsweise hydrophil.

Die erfindungsgemäßen Siloxancopolymere stellen eine deutliche Verbesserung der Waschpermanenz bei verbessertem Griffniveau gegenüber dem Stand der Technik dar. Hierzu werden in das Siloxancopolymer blockierte Isocyanatgruppen eingebaut. Freie Isocyanatgruppen können durch Abspaltung des Blockierungsmittels von den Isocyanatgruppen wieder erhalten werden. Die Abspaltung erfolgt auf einfache Weise durch Erwärmen der Siloxancopolymere auf Temperaturen von 50°C bis 250°C. Hierdurch wird es möglich das Polymer auf die gewohnte Weise, z. B. in Form einer Emulsion oder einer Lösung, auf das Substrat aufzubringen und durch einfaches Erhitzen freie Isocyanatgruppen im Polymer zu erzeugen, die sich dann wiederum kovalent an das Substrat binden können.

Die Blockierung von Polyisocyanaten zum zeitweisen Schutz der Isocyanat-Gruppen ist bekannt und wird z. B. in Ullmann's Encyclopedia of Industrial Chemistry, Release 2008, 7th Edition, unter Polyurethanes, in Kapitel 3.1.3. Blocked Isocyanates beschrieben.

Die erfindungsgemäßen Siloxancopolymere besitzen eine Viskosität von vorzugsweise 1 000 bis 100 000 000 mPa·s bei 25°C, bevorzugt 10 000 bis 10 000 000 mPa·s bei 25°C.

Gegenstand der Erfindung ist weiterhin ein Verfahren zur Herstellung von Siloxancopolymeren indem
(a) in einem ersten Schritt
   Organopolysiloxane (1), die pro Molekül mindestens ein Si-gebundenes Wasserstoffatom, vorzugsweise mindestens zwei Si-gebundene Wasserstoffatome, aufweisen, mit
   weitgehend linearen oligomeren oder polymeren Verbindungen (2) der allgemeinen Formel

   R¹- (A-CₙH₂ₙ)ₘ-A¹-H (I),

   wobei R¹ einen einwertigen gegebenenfalls substituierten Kohlenwasserstoffrest bedeutet, an den Si-H-Gruppen in einer Hydrosilylierungsreaktion angelagert werden können, vorzugsweise einen aliphatische C-C-Mehrfachbindung aufweisenden Kohlenwasserstoffrest bedeutet,
   A einen zweiwertigen, polaren organischen Rest ausgewählt aus der Gruppe von -O- , -C(O)-O- , -O-C(O)- , -O-C(O)-O- , -C(O)-NH- , -NH-C(O)- , Urethanrest und Harnstoffrest, vorzugsweise ein Sauerstoffatom -O-, bedeutet,
   A¹ einen zweiwertigen, polaren organischen Rest ausgewählt aus der Gruppe von -0- , -NH- und -NR'- (wobei R' einen einwertigen Kohlenwasserstoffrest mit 1 bis 18 Kohlenstoffatomen bedeutet), vorzugsweise ein Sauerstoffatom -O-, bedeutet,
   n eine ganze Zahl von 1 bis 20, vorzugsweise 1 bis 4, bevorzugt 2 oder 3, ist und
   m gleich 0 oder eine ganze positive Zahl, vorzugsweise 5 bis 50, ist,
   umgesetzt werden,
(b) in einem zweiten Schritt
   die so erhaltenen H-A¹-Gruppen aufweisenden Zwischenprodukte (4) mit organischen Verbindungen (5), die pro Molekül mindestens zwei Isocyanatgruppen aufweisen, umgesetzt werden, wobei die Umsetzung in Anwesenheit von weiteren organischen Verbindungen (6)und (7), welche gegenüber Isocyanatgruppen reaktiv sind, stattfindet,
   mit der Maßgabe, dass die Verbindungen (6) mindestens eine tertiäre Amingruppe enthalten,
   und dass die Verbindungen (7) solche sind, die in einem Temperaturbereich von 50°C bis 250°C wieder vom Siloxancopolymer abgespalten werden können, wobei wieder freie Isocyanatgruppen im Siloxancopolymer entstehen, und
(c) in einem dritten Schritt
   die Amingruppen-haltigen Zwischenprodukte (8) aus Schritt (b) mit einem Alkylierungsmittel (9) teilweise oder vollständig quaterniert werden,
   mit der Maßgabe, dass der Wassergehalt der zur Herstellung der Siloxancöpolymere eingesetzten Verbindungen (1) und (2) niedriger ist als 2000 Gew.-ppm, vorzugsweise niedriger ist als 1500 Gew.-ppm, bevorzugt niedriger ist als 1000 Gew.-ppm, jeweils bezogen auf das Gesamtgewicht von Verbindungen (1) und (2).

Im ersten Verfahrensschritt (a) werden als Organopolysiloxane (1) vorzugsweise lineare, cyclische oder verzweigte Organopolysiloxane aus Einheiten der allgemeinen Formel 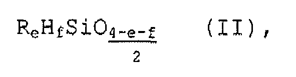 wobei
R gleich oder verschieden sein kann und einen einwertigen, gegebenenfalls substituierten Kohlenwasserstoffrest mit 1 bis 18 Kohlenstoffatom(en) je Rest bedeutet,
e 0, 1, 2 oder 3,
f 0, 1 oder 2
und die Summe von e+f 0, 1, 2 oder 3 ist,
mit der Maßgabe, dass pro Molekül mindestens ein Si-gebundenes Wasserstoffatom, bevorzugt mindestens 2 Si-gebundene Wasserstoffatome vorliegen, verwendet.

Bevorzugt werden als Organopolysiloxane (1) solche der allgemeinen Formel

H_{g}R_{3-g}SiO(SiR₂O)ₒ(SiRHO)ₚSiR_{3-g}H_{g} (III)

wobei R die oben dafür angegebene Bedeutung hat,
g 0, 1 oder 2,
o 0 oder eine ganze Zahl von 1 bis 1500 und
p 0 oder eine ganze Zahl von 1 bis 200 ist,
mit der Maßgabe, dass pro Molekül mindestens ein Si-gebundenes Wasserstoffatom, bevorzugt mindestens zwei Si-gebundene Wasserstoffatome, vorliegen, verwendet.

Im Rahmen dieser Erfindung soll Formel (III) so verstanden werden, dass o Einheiten -(SiR₂O)- und p Einheiten -(SiRHO)- in beliebiger Weise im Organopolysiloxanmolekül verteilt sein können.

Besonders bevorzugt ist g in Formel (III) 1 und p in Formel (III) 0 und es werden als Organopolysiloxane (1) α,ω-Dihydrogenpolydiorganosiloxane, insbesondere α,ω-Dihydrogenpolydimethylsiloxane, eingesetzt.

Die Organopolysiloxane (1) besitzen vorzugsweise eine durchschnittliche Viskosität von 10 bis 1 000 mPa.s bei 25°C.

Beispiele für Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest.

Bevorzugt handelt es sich bei dem Rest R um einen einwertigen Kohlenwasserstoffrest mit 1 bis 6 Kohlenstoffatomen, wobei der Methylrest besonders bevorzugt ist.

Beispiele für Reste R gelten im vollen Umfang für Reste R'.

R¹ bedeutet vorzugsweise einen einwertigen, Kohlenwasserstoffrest mit aliphatischer C-C-Mehrfachbindung.

Beispiele für Reste R¹ sind Alkenylreste, wie der Vinyl-, 5-Hexenyl-, Cyclohexenyl-, 1-Propenyl-, Allyl-, 3-Butenyl- und 4-Pentenylrest, und Alkinylreste, wie der Ethinyl-, Propargyl- und 1-Propinylrest.

Bevorzugt handelt es sich bei dem Rest R¹ um einen Alkenylrest, insbesondere ω-Alkenylrest, wobei der Allylrest besonders bevorzugt ist.

Bevorzugt als oligomere oder polymere (m>0) Verbindungen (2) sind Polyether der allgemeinen Formel

H₂C=CH-R²- (OCₙH₂ₙ)ₘ-OH (IV),

wobei R² ein zweiwertiger Kohlenwasserstoffrest mit 1 bis 20 Kohlenstoffatomen, bevorzugt ein Rest der Formel -CH₂- , -CH(CH₃)- oder -C(CH₃)₂- ist und
n und m die oben dafür angegebene Bedeutung haben.

Bevorzugte Beispiele für Polyether (2) sind solche der allgemeinen Formel

H₂C=CH-R²-(OCH₂CH₂)ₐ[OCH₂CH(CH₃)]_{b}-OH (IV'),

wobei R² die oben dafür angegebene Bedeutung hat und a und b 0 oder eine ganze Zahl von 1 bis 200 ist, mit der Maßgabe, dass die Summe a+b mindestens 1 ist, vorzugsweise 5 bis 50 ist.

Weitere Beispiele für oligomere oder polymere Verbindungen (2) sind ungesättigte Polyester, wie H₂C=CH-R²-[O(O)CCₙH₂ₙ]ₘ-OH, ungesättigte Polycarbonate, wie H₂C=CH-R²-[OC(O)OCₙH₂ₙ]ₘ-OH und ungesättigte Polyamide, wie H₂C=CH-R²-[NHC(O)CₙH₂ₙ]ₘ-NH₂, wobei R², n und m die oben dafür angegebene Bedeutung haben.

Bevorzugt als monomere (m=O) Verbindungen (2) sind ungesättigte Verbindungen der Formel H₂C=CH-R^{2'}-OH, wobei R^{2'} die Bedeutung von R² hat und bevorzugt einen Rest der Formel -(CH₂)ₙ-, mit n in der obigen Bedeutung, darstellt. Bevorzugte monomere Verbindungen (2) sind Allylalkohol, 5-Hexenol und 7-Octenol.

Die Verbindungen (2) werden im ersten Verfahrensschritt (a) vorzugsweise in Mengen von 1,0 bis 4,0, bevorzugt 1,3 bis 2,5 Mol Rest R¹, der vorzugsweise ein Rest mit aliphatischer C-C-Mehrfachbindung ist, bevorzugt ein ω-alkenylrest ist, je Grammatom Si-gebundenem Wasserstoff im Organopolysiloxan (1) eingesetzt.

Überschüssig eingesetzte monomere Verbindungen (2) können entweder im Reaktionsgemisch belassen oder destillativ ganz oder teilweise entfernt werden, soweit es deren Flüchtigkeit erlaubt.

Im ersten Verfahrensschritt (a) werden vorzugsweise die Anlagerung von Si-gebundenem Wasserstoff an aliphatische Mehrfachbindung fördernde Katalysatoren (3) eingesetzt. Als Katalysatoren (3) können auch bei dem erfindungsgemäßen Verfahren die gleichen Katalysatoren eingesetzt werden, die auch bisher zur Förderung der Anlagerung von Si-gebundenem Wasserstoff an aliphatische Mehrfachbindung eingesetzt werden konnten. Bei den Katalysatoren handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. PtCl₄, H₂PtCl₆*6H₂O, Na₂PtCl₄*4H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungs-produkten aus H₂PtCl₆*6H₂O und Cyclohexanon, Platin-Vinyl-siloxankomplexe, wie Platin-1,3-Divinyl-1,1,3,3-tetra-methyl-disiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-di-chlorid, Cyclooctadien-Platindichlorid, Norbornadien-Platindichlorid, Gamma-picolin-Platindichlorid, Cyclopentadien-Platindichlorid, sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin oder Ammonium-Platinkomplexe.

Der Katalysator (3) wird im ersten Verfahrensschritt (a) vorzugsweise in Mengen von 1 bis 50 Gew.-ppm (Gewichtsteilen je Million Gewichtsteilen), bevorzugt in Mengen von 2 bis 20 Gew.-ppm, jeweils berechnet als elementares Platin und bezogen auf das Gesamtgewicht der Organopolysiloxane (1) und Verbindungen (2) eingesetzt.

Der erste Verfahrensschritt (a) wird vorzugsweise beim Druck der umgebenden Atmosphäre, also etwa bei 1020 hPa (abs.), durchgeführt, es kann aber auch bei höheren oder niedrigeren Drücken durchgeführt werden. Ferner wird der erste Verfahrensschritt vorzugsweise bei einer Temperatur von 60°C bis 140°C, bevorzugt 80°C bis 120°C, durchgeführt.

Im zweiten Verfahrensschritt (b) werden als organische Verbindungen (5), die pro Molekül mindestens zwei Isocyanatgruppen aufweisen, bevorzugt solche der allgemeinen Formel

O=C=N-R³-N=C=O (V),

wobei R³ einen zweiwertigen Kohlenwasserstoffrest mit 4 bis 40 Kohlenstoffatomen je Rest bedeutet,
eingesetzt.

Beispiele für organische Verbindungen (5) sind Hexamethylen-1,6-diisocyanat, Isophorondiisocyanat, Tolylen-2,4-diisocyanat, Tolylen-2,6-diisocyanat, Phenylen-1,3-diisocyanat, 4,4'-Methylen-bis(cyclohexylisocyanat), 4,4'-Methylen-bis(phenylisocyanat) und Dimethylphenyldiisocyanat.

Organische Verbindungen (5) werden im zweiten Verfahrensschritt (b) vorzugsweise in Mengen von 0,5 bis 1,0 Mol, bevorzugt 0,8 bis 1,0 Mol, Isocyanatgruppe je Mol der in Summe in den Zwischenprodukten (4) und den organischen Verbindungen (6) und (7) enthaltenen, mit Isocyanatgruppen reaktiven Gruppen eingesetzt. Somit ist ein sicheres Abreagieren der gesundheitsgefährdenden Isocyanatgruppen stets gewährleistet.

Im zweiten Verfahrensschritt (b) werden als organische Verbindungen (6), welche gegenüber Isocyanatgruppen reaktiv sind und die mindestens eine tertiäre Amingruppe enthalten, bevorzugt solche der allgemeinen Formeln

HX-R⁵-NR⁴₂ (VI),

HX-R⁶ (NR⁴₂)₂ (VII),

HX-R⁷(NR⁴₂)₃ (VIII),

(HX)₂R⁶-NR⁴₂ (IX),

HR⁸N-R⁵-NR⁴₂ (X),

eingesetzt, wobei
R⁴ einen Rest R, der gegebenenfalls Sauerstoff-, Schwefel- oder Stickstoffatome enthalten kann, vorzugsweise einen Methyl-, Ethyl- oder Propylrest, der gegebenenfalls einen Hydroxy- und/oder peralkylierten Aminrest enthalten kann, bedeutet,
R⁵ einen zweiwertigen Kohlenwasserstoffrest mit 1 bis 100 Kohlenstoffatomen, bevorzugt mit 1 bis 50 Kohlenstoffatomen, insbesondere bevorzugt mit 1, bis 20 Kohlenstoffatomen, der durch Sauerstoff-, Schwefel- oder Stickstoffatome unterbrochen oder substituiert sein kann, bedeutet,
R⁶ einen dreiwertigen organischen Rest mit 1 bis 100 Kohlenstoffatomen je Rest, vorzugsweise einen dreiwertigen Kohlenwasserstoffrest mit 1 bis 100 Kohlenstoffatomen, bevorzugt mit 1 bis 20 Kohlenstoffatomen, insbesondere bevorzugt mit 1 bis 10 Kohlenstoffatomen, der ein oder mehrere Sauerstoffatome enthält, bedeutet,
R⁷ einen vierwertigen organischen Rest mit 1 bis 100 Kohlenstoffatomen je Rest, vorzugsweise einen vierwertigen Kohlenwasserstoffrest mit 1 bis 20 Kohlenstoffatomen, der ein oder mehrere Sauerstoffatome enthält, bedeutet,
R⁸ Wasserstoffatom oder R⁴ bedeutet, und
X die Bedeutung von Sauerstoffatom oder Schwefelatom, vorzugsweise Sauerstoffatom, besitzt.

Beispiele für organische Verbindungen (6) der allgemeinen Formel (VI) sind N,N-Dimethylethanolamin, N,N-Diethylpropanolamin, N-(3-Aminopropyl)-N-methyl-ethanolamin, N-(Dimethyl-3-aminopropyl)-N-methyl-ethanolamin, N,N-Dimethyl-2-(2-aminoethoxy)ethanol, N-Methyldiethanolamin, N-Methyldipropanolamin, N-Dodecyldiethanolamin, N-Stearyldipropanolamin, Dimethylaminopropyldipropanolamin, Triethanolamin, N,N-Bis(dimethylaminopropyl)-2-hydroxyethylamin, N,N-Bis(dimethylaminopropyl)-2-hydroxy-propylamin, N,N-Dimethyl-2-mercaptoethylamin und N,N-Diethyl-3-mercaptopropylamin.

Beispiele für organische Verbindungen (6) der allgemeinen Formel (VII) sind 1,5-Bis(dimethylamino)-pentan-3-ol, 1,7-Bis(dimethylamino)-heptan-4-ol, 1,5-Bis(dimethylamino)-pentan-3-thiol und 1,7-Bis(dimethylamino)-heptan-4-thiol

Beispiele für organische Verbindungen (6) der allgemeinen Formel (VIII) sind 2,4,6-Tris(dimethylaminomethyl)-phenol, 1,1,1-Tris(dimethylaminomethyl)-methanol, 2,4,6-Tris(dimethylaminomethyl)-cyclohexanol, 2,4,6-Tris(dimethylaminomethyl)-thiophenol, 1,1,1-Tris(dimethylaminomethyl)-methanthiol und 2,4,6- Tris(dimethylaminomethyl)-cyclohexanthiol.

Beispiele für organische Verbindungen (6) der allgemeinen Formel (IX) sind N,N-Bis(dimethylaminopropyl)-3-aminopropan-1,2-diol, N,N-Bis(dimethylaminopropyl)-2-aminopropan-1,3-diol, und N,N-Bis(3-dimethylaminopropyl)-carbaminosäuremonoglycerid.

Beispiele für organische Verbindungen (6) der allgemeinen Formel (X) sind N,N-Dimethyl-ethylendiamin, N,N-Diethyl-ethylendiamin, N,N-Dimethyl-N'-methyl-ethylendiamin, N,N-Dimethylpropylendiamin, N,N-Dimethyl-N'-methyl-propylendiamin, N,N-Bis(dimethyl-3-aminopropyl)amin, N,N-Bis(3-aminopropyl)-methylamin, N-Methyl-N`-(2-aminoethyl)-piperazin, N-(3-Aminopropyl)-morpholin und N-(3-Aminopropyl)-imidazol,

Die Verbindungen der Formel (VI) bis (X) dienen somit der Möglichkeit, in das Siloxancopolymer quaternierbaren Stickstoff einzuführen.

Ebenfalls im zweiten Verfahrensschritt (b) werden als organische Verbindungen (7) solche eingesetzt, welche gegenüber Isocyanatgruppen reaktive Wasserstoffatome enthalten, wobei die Verbindungen (7) jedoch in einem Temperaturbereich von 50°C bis 250°C unter Rückbildung von Isocyanatgruppen wieder vom Polymer abgespalten werden können und die folgenden Strukturen aufweisen:
HB oder HBH,
wobei B ein organischer Rest ist, der ein oder zwei gegenüber Isocyanatgruppen reaktive Wasserstoffatome aufweist.

Die Verbindungen (7) HB oder HBH reagieren hierbei mit ihren reaktiven Wasserstoffatomen zunächst im Sinne der Reaktionsgleichungen I/II mit Isocyanatgruppen im Polymer (P) und bilden so ein von Isocyanatgruppen freies Polymer:

Reaktionsgleichung I: (P)-N=C=O + HB --> (P)-NH-C(O)-B

Reaktionsgleichung II: 2 (P)-N=C=O + HBH --> (P)-NH-C(O)-B-(O)C-NH-(P)

Nach dem Aufbringen des Polymers auf das gewünschte Substrat kann diese Reaktion zum Zweck der besseren Anbindung des Polymers an das Substrat durch einfaches Erhitzen entsprechend der Reaktionsgleichungen III/IV wieder rückgängig gemacht werden:

Reaktionsgleichung III: (P)-NH-C(O)-B --> (P)-N=C=O + HB

Reaktionsgleichung IV: (P)-NH-C(O)-B-(O)C-NH-(P) --> 2 (P)-N=C=O + HBH

Beispiele für Verbindungen (7) vom Typ HB sind hierbei Oxime (z. B. Acetonoxim, Butanonoxim), Phenole, Lactame (z. B. ε-Caprolactam), CH-acide Verbindungen wie Malonate (z. B. Diethylmalonat), Acetoacetate (z. B. Methylacetoacetat) oder Ketone (z. B. Cyclopentanon-2-carboxymethylester), Pyrazole (z. B. 3,5-Diemthylpyrazol), Hydroxamsäuren (Benzylmethacrylhydroxamsäure), sekundäre Monoamine (z. B. Diethylamin) und Hydroxylamine (z. B. Diethylhydroxylamin).

Beispiele für Verbindungen (7) vom Typ HBH sind Dioxime (z. B. Dimethylglyoxim), Diphenole (z. B. Hydrochinon) oder sekundäre Diamine (z. B. Piperazin).

Organische Verbindungen (6) und (7) werden im zweiten Verfahrensschritt (b) in Mengen von vorzugsweise 0,01 bis 1. Mol, bevorzugt 0,05 bis 1 Mol, der Summe aus HX- bzw. HR⁸N-Gruppen in (6) und HB-Gruppen in (7) je Mol H-A¹-Gruppe im Zwischenprodukt (4) eingesetzt.

Der zweite Verfahrensschritt (b) wird vorzugsweise beim Druck der umgebenden Atmosphäre, also etwa bei 1020 hPa (abs.), durchgeführt, es kann aber auch bei höheren oder niedrigeren Drücken durchgeführt werden. Ferner wird der zweite Verfahrensschritt vorzugsweise bei einer Temperatur von 40°C bis 1.40°C, bevorzugt 60°C bis 100°C, durchgeführt.

Für die Umsetzung im zweiten Schritt (b) des erfindungsgemäßen Verfahrens können weiterhin Kondensationskatalysatoren, wie Din-butylzinndilaurat, Zinn-II-octoat, Dibutylzinndiacetat, Zinkdilaurat, Wismuttrilaurat, Kaliumoctoat oder tert. Amine, welche keine weiteren funktionellen Gruppen aufweisen, die gegenüber Isocyanatgruppen reaktiv sind, wie z. B. Dimethylcyclohexylamin, Pentamethyldipropylentriamin, N-Methylimidazol oder N-Ethyl-morpholin, eingesetzt werden.

Im dritten Verfahrensschritt (c) werden als Alkylierungsmittel (9) vorzugsweise Alkylhalogenide, Dialkylsulfate, Sulfonsäureester, Epoxide, Chlorhydrine sowie Oniumsalze des Sauerstoffs oder Schwefels, besonders bevorzugt Alkylhalogenide, Sulfonsäureester und Epoxide, verwendet.

Beispiele für geeignete Alkylierungsmittel (9) sind Methyl- bzw. Ethylchlorid, -bromid und -jodid, Dodecylbromid, Benzylchlorid, Chloressigsäure und Chloressigsäurester, Dimethylsulfat, Diethylsulfat, die Methylester der Fluorsulfonsäure, der Chlorsulfonsäure, der Methansulfonsäure, der Trifluormethansulfonsäure, der p-Toluolsulfonsäure und der Naphthylsulfonsäure, 2,2-Dimethyloxiran, 1,2-Propylenoxid, 1,2-Epoxybutan, 2,3-Epoxypropylisopropylether, 2,3-Epoxypropylbutylether, Allylglycidylether, 2,3-Epoxypropyltrimethylammoniumchlorid, 3-Chlor-1-methoxy-2-propanol, 3-Chlor-1,2-propandiol, Epichlorhydrin, 3-Chlor-2-hydroxypropyltrimethylammoniumchlorid sowie Meerwein-Salze, wie z. B. Trimethyloxoniumtetrafluoroborat, Triethyloxoniumhexafluorophosphat und Trimethylsulfonium hydroxid. Bevorzugte Beispiele sind Methylchlorid, Methyljodid, Dodecylbromid, Benzylchlorid, Chloressigsäure, Dimethylsulfat und p-Toluolsulfonsäuremethylester.

Alkylierungsmittel (9) werden im dritten Verfahrensschritt (c) in Mengen von vorzugsweise 0,1 bis 1,1 Mol, bevorzugt 0,2 bis 1 Mol, je Mol tertiäre Amingruppe in Zwischenprodukte (8) eingesetzt.

Der dritte Verfahrensschritt (c) wird vorzugsweise beim Druck der umgebenden Atmosphäre, also etwa bei 1020 hPa (abs.), durchgeführt, er kann aber auch bei höheren oder niedrigeren Drücken durchgeführt werden. Ferner wird der dritte Verfahrensschritt vorzugsweise bei einer Temperatur von 0°C bis 200°C, bevorzugt 20°C bis 150°C, besonders bevorzugt 50°C bis 130°C, durchgeführt.

Ein bevorzugtes Siloxancopolymer wird beispielsweise erhalten, indem im ersten Verfahrensschritt ein α,ω-Dihydrogenpolydiorganosiloxan (1) im Überschuss mit einem Polyether (2) der Formel (IV) umgesetzt wird,
im zweiten Verfahrensschritt das Zwischenprodukt (4), ein HO-Polyether-Polysiloxan-Polyether-OH, in Anwesenheit eines tert. Alkanolamins (6) der Formel (VI) und Dimethylglyoxim (7) mit einem Diisocyanat (5) der Formel (V) zur Reaktion gebracht wird, wobei gleichzeitig Urethan- und tertiäre Amin-Gruppen sowie blockierte Isocyanatgruppen in das Siloxancopolymer eingeführt werden und auch freier Polyether aus dem 1. Schritt durch Urethanbildung gebunden wird,
und im dritten Verfahrensschritt das Zwischenprodukt (8), ein Polysiloxan-Polyether-Copolymer bestehend aus den Wiederholungseinheiten

- [(CₙH₂ₙO)ₘ-R²-CH₂CH₂-R₂SiO(R₂SiO)ₒ-R₂SiO-CH₂CH₂-R²-(OCₙH₂ₙ)ₘ-OC(O)NH-R³-NHC(O)O]ₓ- (XI)

und

- [(CₙH₂ₙO)ₘ-R²-CH₂CH₂-R₂SiO (R₂SiO)ₒ-R₂SiO-CH₂CH₂-R²-(OCₙH₂ₙ)m-OC(O)NH-R³-NHC(O)O-N=C(CH₃)-C(CH₃)=N-O-C(O)NH-R³-NHC(O)O]_{w}- (XI')

sowie den Endgruppen

CH₂=CH-R²-(OCₙH₂ₙ)ₘ-OC(O)NH-R³-NHC(O)O- (XII)

bzw.

- (CₙH₂ₙO)ₘ-R²-CH=CH₂ (XII')

und

R⁴₂N-R⁵-OC(O)NH-R³-NHC(O)O- (XIII)

bzw.

-R⁵-NR⁴₂ (XIII')

wobei R, R², R³, R⁴, R⁵, n, m und o die oben dafür angegebene Bedeutung haben,
x eine ganze Zahl von 1 bis 20, vorzugsweise 1 bis 4, ist, w eine ganze Zahl von 1 bis 15, vorzugsweise 1 bis 3, ist,
mit p-Toluolsulfonsäuremethylester als Alkylierungsmittel (9) quarterniert wird.

Das so erhaltene Siloxancopolymer besteht aus Wiederholungseinheiten

- [(CₙH₂ₙO)ₘ-R²-CH₂CH₂-R₂SiO(R₂SiO)ₒ-R₂SiO-CH₂CH₂-R²-(OCₙH₂ₙ)ₘ-OC(O)NH-R³-NHC(O)O]ₓ- (XI)

und

- [(CₙH₂ₙO)ₘ-R²-CH₂CH₂-R₂SiO(R₂SiO)ₒ-R₂SiO-CH₂CH₂-R²-(OCₙH₂ₙ)m-OC(O)NH-R³-NHC(O)O-N=C(CH₃)-C(CH₃)=N-O-C(O)NH-R³-NHC(O)O]_{w}- (XI')

sowie den Endgruppen

CH₂=CH-R²- (OC₂H₂ₙ)ₘ-OC(O)NH-R³-NHC(O)O- (XII)

bzw.

-(CₙH₂ₙO)ₘR²-CH=CH₂ (XII')

R⁴₂N-R⁵-OC(O)NH-R³-NHC(O)O- (XIII)

bzw.

-R⁵-NR⁴₂ (XIII')

und

[(CH₃)_{R}⁴₂N-R⁵-OC(O)NH-R³-NHC(O)O-]⁺ CH₃C₆H₄SO₃⁻ (XIV)

bzw.

[-R⁵-NR⁴₂(CH₃)]⁺ CH₃C₆H₄SO₃⁻ (XIV'),

wobei R, R², R³, R⁴, R⁵, f, n, m, o und x die zuvor dafür angegebene Bedeutung haben.

Ein weiteres bevorzugtes Siloxancopolymer wird analog zu der zuvor geschilderten Vorgehensweise beispielsweise erhalten, indem im zweiten Verfahrensschritt ein tertiäres Amin (6) der Formel (X) und Butanonoxim verwendet wird. Das erhaltene Siloxancopolymer besteht dann aus der Wiederholungseinheit

- [(CₙH₂ₙO)ₘ-R²-CH₂CH₂-R₂SiO (R₂SiO)ₒ-R₂SiO-CH₂CH₂-R²-(OCₙH₂ₙ)ₘ-OC(O)NH-R³-NHC(O)O]ₓ₋₁- (XI)

sowie den Endgruppen

CH₂=CH-R²- (OCₙH₂ₙ)ₘ-OC(O)NH-R³-NHC(O)O- (XII)

bzw.

- (CₙH₂ₙO)ₘ-R²-CH₂CH₂-R₂SiO(R₂SiO)ₒ-R₂SiO-CH₂CH₂-R²-(OCₙH₂ₙ)ₘ-OC (O) NH-R³-NHC(O)O-(CₙH₂ₙO)ₘ-R²-CH=CH₂ (XII'),

R⁴₂N-R⁵-NR⁸-C(O)NH-R³-NHC(O)O- (XIII)

bzw.

- (CₙH₂ₙO)ₘ-R²-CH₂CH₂-R₂SiO(R₂SiO)ₒ-R₂SiO-CH₂CH₂-R²-(OCₙH₂ₙ)ₘ-OC(O)NH-R³-NHC(O)-NR⁸-R⁵-NR⁴₂ (XIII')

und

[(CH₃)R⁴₂N-R⁵-OC(O)NH-R³-NHC(O)O-]⁺ CH₃C₆H₄SO₃⁻ (XIV)

bzw.

[-(CₙH₂ₙO)ₘ-R²-CH₂CH₂-R₂SiO(R₂SiO)ₒ-R₂SiO-CH₂CH₂-R²-(OCₙH₂ₙ)ₘ-OC(O)NH-R³-NHC(O) -NR⁸-R⁵-NR⁴₂ (CH₃)]⁺CH₃C₆H₄SO₃⁻ (XIV'),

sowie

- (CₙH₂ₙO)ₘ-R²-CH₂CH₂-R₂SiO(R₂SiO)ₒ-R₂SiO-CH₂CH₂-R²-(OCₙH₂ₙ)ₘ-OC (O) NH-R³-NHC(O)O-N=C(CH₃)(C₂H₅) (XV)

wobei R, R², R³, R⁴, R⁵, R⁸, n, m, o und x die zuvor dafür angegebene Bedeutung haben.

Die Urethangruppen in den erfindungsgemäßen hydrophilen Siloxancopolymeren können als Donoren und Akzeptoren bei der Ausbildung von Wasserstoffbrücken wirken, während die quartären Stickstoffgruppen einer Erhöhung der Hydrophilie und der Löslichkeit der erfindungsgemäßen hydrophilen Siloxancopolymere einerseits, sowie einer verbesserten Stabilität der wässrigen Emulsionen im basischen Milieu und unter den Applikationsbedingungen moderner Jetsysteme, d.h. unter dem Einfluss von Scherkräften, andererseits dienen.

Zur Erniedrigung der teilweise sehr hohen Produktviskositäten können gegebenenfalls niedermolekulare Stoffe, wie Alkohole oder Ether zugesetzt werden. Beispiele hierfür sind Ethanol, Isopropanol, n-Butanol, 2-Butoxyethanol, Diethylenglycolmonobutylether, Tetrahydrofuran, Diethylenglycoldiethylether und Dimethoxyethan, wobei Diethylenglycolmonobutylether ein bevorzugtes Beispiel ist. Bevorzugte Zusatzmengen sind im Fall sehr viskoser Produkte bis zu 50 Gew.-%, besonders bevorzugt bis zu 30 Gew.-%, bezogen auf die erfindungsgemäßen Siloxancopolymere. Derartige Zusätze haben außerdem den Vorteil, dass die daraus entstehenden Produkte in Wasser leichter dispergierbar sind als die reinen Siloxancopolymere.

Die erfindungsgemäßen Siloxancopolymere können leicht in Wasser ohne weitere Hilfsstoffe, wie Emulgatoren, dispergiert werden, sind damit selbstdispergierend, und ergeben Emulsionen, insbesondere Microemulsionen.

Gegenstand der Erfindung sind daher Emulsionen, vorzugsweise Microemulsionen, enthaltend
(A) erfindungsgemäße Siloxancopolymere und
(B) Wasser.

Die Emulsion enthält vorzugsweise 20 bis 60, bevorzugt 30 bis 50 Gew.-% der erfindungsgemäßen Siloxancopolymere (A).

Gegenstand der Erfindung ist weiterhin ein Verfahren zur Herstellung der Emulsionen, vorzugsweise Microemulsionen, durch Vermischen von
(A) erfindungsgemäßen Siloxancopolymeren mit
(B) Wasser.

Technologien zur Herstellung von Siliconemulsionen sind bekannt. Üblicherweise erfolgt die Herstellung durch einfaches Verrühren der erfindungsgemäßen Siloxancopolymere mit Wasser und gegebenenfalls anschließendes Homogenisieren mit Rotor-Stator-Homogenisatoren, Kolloidmühlen oder Hochdruckhomogenisatoren.

Die erfindungsgemäßen Siloxancopolymere werden vorzugsweise zur Behandlung von faserhaltigen Substraten, wie textilen Geweben, Fasern und Non-Wovens bestehend aus Materialien wie z. B. Polyester, Polyamid, Wolle, Polyethylen oder cellulosischen Fasern, verwendet.

Die erfindungsgemäßen Siloxancopolymere oder deren Emulsionen können verwendet werden als hydrophile Weichmacher in der Textilindustrie, als hydrophile Weichspüler oder als hydrophil wirkende Additive bei der Herstellung und Ausrüstung von Fasern und Non-wovens. Die erfindungsgemäßen Verbindungen zeichnen sich insbesondere durch ihre einfache Synthese, ihre hohe Substantivität, die leichte Herstellbarkeit ihrer wässrigen Emulsionen (Selbstdispergierung) sowie deren hohe Beständigkeit im basischen Milieu und unter den Applikationsbedingungen moderner Jetsysteme, d.h. unter dem Einfluss von Scherkräften, aus. Darüber hinaus verleihen die erfindungsgemäßen Verbindungen oder deren Emulsionen textilen Geweben, Fasern und Non-Wovens eine hohe Hydrophilie sowie nach einer kurzzeitigen Erwärmung auf ein Temperaturniveau, das über der Dissoziationstemperatur des blockierten Isocyanats liegt, einen exzellenten Weichgriff bei gleichzeitig sehr guter Waschpermanenz.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1020 hPa, und bei Raumtemperatur, also bei etwa 23°C, bzw. bei einer Temperatur, die sich beim Zusammengeben der Komponenten bei Raumtemperatur ohne zusätzliche Heizung oder Kühlung einstellt, durchgeführt. Des Weiteren beziehen sich alle Angaben von Teilen und Prozentsätzen, soweit nichts anderes angegeben ist, auf das Gewicht.

### Beispiel 1:

3200 g eines α,ω-Dihydrogenpolydiorganosiloxans mit 0,055 Gew.-% Si-gebundenem Wasserstoff und einem Wassergehalt von ca. 53 Gew.-ppm werden mit 1130 g eines Polyethers der Formel

H₂C=CH-CH₂- (OCH₂CH₂)_{10,2}-OH,

enthaltend 1276 Gew.-ppm Wasser, gemischt und auf 100°C erwärmt. Dann werden 0,6 g Hexachloroplatinsäure gelöst in Isopropanol(0,48 %-ig bezogen auf elementares Platin) zudosiert, worauf die Temperatur des Reaktionsgemisches auf 117 °C ansteigt und ein klares Produkt entsteht. Nach einer Stunde bei 100 bis 110°C wird vollständiger Umsatz des Si-gebundenen Wasserstoffs erreicht. Das Polyether-Polysiloxan-Zwischenprodukt (4) hat eine Viskosität von etwa 970 mm²/s bei 25°C.

### Vergleichsversuch 1 (nicht erfindungsgemäß):

Zu 433 g des Zwischenprodukts (4) aus Beispiel 1 werden nun 6,27 g N,N-Dimethylethanolamin und 25,9 g Hexamethylendiisocyanat (0,999 Mol Isocyanatgruppe je Mol Summe der Isocyanat-reaktiven Gruppen im Zwischenprodukt (4) und in N,N-Dimethylethanolamin (6)) nacheinander zudosiert und eine Stunde bei 100°C rühren gelassen. Währenddessen tritt eine deutliche Viskositätszunahme auf. Das so erhaltene Zwischenprodukt besitzt einen Gehalt an protonierbaren Amingruppen von etwa 14,4 mequ./100 g.

Man kühlt auf 80°C ab, gibt 120 g Diethylenglykolmonobutylether sowie 4,25 g Essigsäure zu und lässt eine weitere Stunde bei dieser Temperatur rühren. Man erhält ein klares, bräunliches Öl.

40 g des hochviskosen Öls werden bei 50°C mit 60 g Wasser vermischt. (Emulsion 1).

### Beispiel 2:

Zu 433 g des Zwischenprodukts (4) aus Beispiel 1 werden nun 4,39 g N,N-Dimethylethanolamin 1,84 g Butanonoxim und 25,9 g Hexamethylendiisocyanat (0,999 Mol Isocyanatgruppe je Mol Summe der Isocyanat-reaktiven Gruppen im Zwischenprodukt (4) und in N,N-Dimethylethanolamin (6)und Butanonoxim (7)) nacheinander zudosiert und eine Stunde bei 100°C rühren gelassen. Währenddessen tritt eine deutliche Viskositätszunahme auf. Das so erhaltene Zwischenprodukt besitzt einen Gehalt an protonierbaren Amingruppen von etwa 10,1 mequ./100 g.

Man kühlt auf 80°C ab, gibt 120 g Diethylenglykolmonobutylether sowie 2,96 g Essigsäure zu und lässt eine weitere Stunde bei dieser Temperatur rühren. Man erhält ein klares, bräunliches Öl.

40 g des hochviskosen Öls werden bei 50°C mit 60 g Wasser vermischt (Emulsion 2).

### Beispiel 3:

Zu 433 g des Zwischenprodukts (4) aus Beispiel 1 werden nun 4,39 g N,N-Dimethylethanolamin 1,24 g Dimethylglyoxim und 25,9 g Hexamethylendiisocyanat (0,999 Mol Isocyanatgruppe je Mol Summe der Isocyanat-reaktiven Gruppen im Zwischenprodukt (4) und in N,N-Dimethylethanolamin (6) und Dimethylglyoxim (7)) nacheinander zudosiert und eine Stunde bei 100°C rühren gelassen. Währenddessen tritt eine deutliche Viskositätszunahme auf. Das so erhaltene Zwischenprodukt besitzt einen Gehalt an protonierbaren Amingruppen von etwa 10,1 mequ./100 g.

Man kühlt auf 80°C ab, gibt 120 g Diethylenglykolmonobutylether sowie 2,96 g Essigsäure zu und lässt eine weitere Stunde bei dieser Temperatur rühren. Man erhält ein leicht trübes, bräunliches Öl.

40 g des hochviskosen Öls werden bei 50°C mit 60 g Wasser vermischt. (Emulsion 3).

### Beispiel 4:

Zu 433 g des Zwischenprodukts (4) aus Beispiel 1 werden nun 4,39 g N,N-Dimethylethanolamin 1,54 g Diethylamin und 25,9 g Hexamethylendiisocyanat (0,999 Mol Isocyanatgruppe je Mol Summe der Isocyanat-reaktiven Gruppen im Zwischenprodukt (4) und in N,N-Dimethylethanolamin (6)und Diethylamin (7)) nacheinander zudosiert und eine Stunde bei 100°C rühren gelassen. Währenddessen tritt eine deutliche Viskositätszunahme auf. Das so erhaltene Zwischenprodukt besitzt einen Gehalt an protonierbaren Amingruppen von etwa 10,1 mequ./100 g.

Man kühlt auf 80°C ab, gibt 120 g Diethylenglykolmonobutylether sowie 2,96 g Essigsäure zu und lässt eine weitere Stunde bei dieser Temperatur rühren. Man erhält ein klares, bräunliches Öl.

40 g des hochviskosen Öls werden bei 50°C mit 60 g Wasser vermischt. (Emulsion 4).

### Beispiel 5:

Zu 433 g des Zwischenprodukts (4) aus Beispiel 1 werden nun 4,39 g N,N-Dimethylethanolamin 1,84 g Butanonoxim und 25,9 g Hexamethylendiisocyanat (0,999 Mol Isocyanatgruppe je Mol Summe der Isocyanat-reaktiven Gruppen im Zwischenprodukt (4) und in N,N-Dimethylethanolamin (6)und Butanonoxim (7)) nacheinander zudosiert und eine Stunde bei 100°C rühren gelassen. Währenddessen tritt eine deutliche Viskositätszunahme auf. Das so erhaltene Zwischenprodukt besitzt einen Gehalt an protonierbaren Amingruppen von etwa 10,1 mequ./100 g.

Man kühlt auf 80°C ab, gibt 120 g Diethylenglykolmonobutylether sowie 9,17 g p-Toluolsulfonsäuremethylester zu und lässt eine weitere Stunde bei dieser Temperatur rühren. Man erhält ein klares, bräunliches Öl.

40 g des hochviskosen Öls werden bei 50°C mit 60 g Wasser vermischt. **(Emulsion 5).**

### Vergleichsversuch 2 (nicht erfindungsgemäß):

Zu 433 g des Zwischenprodukts (4) aus Beispiel 1 werden nun 6,27 g N,N-Dimethylethanolamin und 25,9 g Hexamethylendiisocyanat (0,999 Mol Isocyanatgruppe je Mol Summe der Isocyanat-reaktiven Gruppen im Zwischenprodukt (4) und in N,N-Dimethylethanolamin (6)) nacheinander zudosiert und eine Stunde bei 100°C rühren gelassen. Währenddessen tritt eine deutliche Viskositätszunahme auf. Das so erhaltene Zwischenprodukt besitzt einen Gehalt an protonierbaren Amingruppen von etwa 14,4 mequ./100 g.

Man kühlt auf 80°C ab, gibt 120 g Diethylenglykolmonobutylether sowie 13,1 g p-Toluolsulfonsäuremethylester zu und lässt eine weitere Stunde bei dieser Temperatur rühren. Man erhält ein klares, bräunliches Öl.

40 g des hochviskosen Öls werden bei 50°C mit 60 g Wasser vermischt. **(Emulsion 6).**

### Beispiel 6:

1000 g eines α,ω-Dihydrogenpolydiorganosiloxans mit 0,053 Gew.-% Si-gebundenem Wasserstoff und einem Wassergehalt von 56 Gew.-ppm werden mit 1700 g eines Allyalkoholethoxylat/propyloxylats der Formel

H₂C=CH-CH₂-(OCH₂CH₂)₂₀[(OCH₂CH(CH₃)]₂₀-OH ,

vermischt und auf 100°C erwärmt. Dann werden 0,25 g Hexachloroplatinsäure gelöst in Isopropanol (0,48 %-ig bezogen auf elementares Platin) zudosiert, worauf die Temperatur des Reaktionsgemisches auf 112 °C ansteigt und ein klares Produkt entsteht. Nach zwei Stunden bei 100 bis 110°C wird vollständiger Umsatz des Si-gebundenen Wasserstoffs erreicht. Das Polyether-Polysiloxan-Zwischenprodukt (4) hat eine Viskosität von etwa 1360 mm²/s bei 25°C.

### Vergleichsversuch 3 (nicht erfindungsgemäß):

Zu 500 g des Zwischenprodukts (4) aus Beispiel 8 werden nun 5,15 g N,N-Dimethylpropanolamin und 1.6,8 g Hexamethylendiisocyanat (0,999 Mol Isocyanatgruppe je Mol Summe der Isocyanat-reaktiven Gruppen im Zwischenprodukt (4) und in N,N-Dimethylpropanolamin (6)) nacheinander zudosiert und eine Stunde bei 100°C rühren gelassen. Währenddessen tritt eine deutliche Viskositätszunahme auf. Das so erhaltene Zwischenprodukt besitzt einen Gehalt an protonierbaren Amingruppen von etwa 9,3 mequ./100 g.

Man kühlt auf 80°C ab, gibt 135 g Diethylenglykolmonobutylether sowie 3,0 g Essigsäure zu und lässt eine weitere Stunde bei dieser Temperatur rühren. Man erhält ein klares, bräunliches Öl.

40 g des hochviskosen Öls werden bei 50°C mit 60 g Wasser vermischt. **(Emulsion 7).**

### Beispiel 7:

Zu 500 g des Produkts aus Beispiel 8 werden nun 3,61 g N,N-Dimethylpropanolamin 1,31 g Butanonoxim und 16,8 g Hexamethylendiisocyanat (0,999 Mol Isocyanatgruppe je Mol Summe der Isocyanat-reaktiven Gruppen im Zwischenprodukt (4) und in N,N-Dimethylpropanolamin (6)und Butanonoxim (7)) nacheinander zudosiert und eine Stunde bei 100°C rühren gelassen. Währenddessen tritt eine deutliche Viskositätszunahme auf. Das so erhaltene Zwischenprodukt besitzt einen Gehalt an protonierbaren Amingruppen von etwa 6,9 mequ./100 g.

Man kühlt auf 80°C ab, gibt 135 g Diethylenglykolmonobutylether sowie 4,25 g Essigsäure zu und lässt eine weitere Stunde bei dieser Temperatur rühren. Man erhält ein klares, bräunliches Öl.

40 g des hochviskosen Öls werden bei 50°C mit 60 g Wasser vermischt. **(Emulsion 8).**

### Beispiel 8:

Zur Bestimmung der Unterschiede in der Waschpermanenz der Griffeigenschaften der verschiedenen Siloxanpolymere wurden Abschnitte einer Baumwollfrotteeware (480 g/m²) bei einer Flottenaufnahme von ca. 80 % mit den in Tabelle 1 angegebenen Ausrüstungsflotten behandelt. Die Textilmuster wurden jeweils 2 Minuten im Spannrahmen bei 120°C getrocknet und anschließend zur Kondensation 2 Minuten bei 170°C gehalten. Nach der Lagerung über Nacht im auf 23°C klimatisierten Raum wurden die Stoffe jeweils in drei Teile geteilt. Ein Teil jeder Probe wurde weiterhin im Klimaraum aufbewahrt, ein Teil wurde einmal, ein weiterer Teil dreimal unter folgenden Bedingungen gewaschen: Haushaltswäsche bei 60°C mit handelsüblicher Waschmaschine unter Verwendung eines gängigen Vollwaschmittels, Waschgang ca. 90 Minuten. Anschließend wurden auch die gewaschenen Stoffproben zur Trocknung wieder im Klimaraum gelagert. Danach wurde der relative Weichgriff der gewaschenen Proben im Vergleich zur ungewaschenen Probe (100% Weichgriff) und zum Blindwert (0% Weichgriff) durch ein Panel aus fünf Testpersonen beurteilt. Die Ergebnisse sind in der Tabelle 2 und 3 zusammengefasst.

Während bei den Textilmustern 1, 6 und 7 (behandelt mit den Emulsionen 1, 6 und 7 gemäß Vergleichsversuch 1, 2 und 3) nach 3 Wäschen der Weichgriff auf etwa 10 bis 15% des ursprünglichen Wertes abfällt, wird bei den mit den erfindungsgemäßen Emulsionen ausgerüsteten Mustern der nach 3 Wäschen verbleibende Weichgriff deutlich gesteigert. Die Tropfeneinsinkzeit als Maß der Hydrophilie des ausgerüsteten Stoffes liegt bei allen getesteten Mustern unter zehn Sekunden.

**Tabelle 1**

| | Textilmuster Nummer | | | | | | | | |
|---|---|---|---|---|---|---|---|---|---|
| | 1 | 2 | 3 | 4 | 5 | 6 | 7 | 8 | Blindwert |
| Einsatzstoffe | | | | | | | | | |
| Emulsion 1 | 30 g/l | | | | | | | | |
| Emulsion 2 | | 30 g/l | | | | | | | |
| Emulsion 3 | | | 30 g/l | | | | | | |
| Emulsion 4 | | | | 30 g/l | | | | | |
| Emulsion 5 | | | | | 30g/l | | | | |
| Emulsion 6 | | | | | | 30 g/l | | | |
| Emulsion 7 | | | | | | | 30 g/l | | |
| Emulsion 8 | | | | | | | | 30g/l | |
| Essigsäure w=60 % | 1 g/l | 1 g/l | 1 g/l | 1 g/l | 1 g/l | 1 g/l | 1 g/l | 1 g/l | 1 g/l |
| Wasser, entmineralisiert | 969 g/l | 969 g/l | 969 g/l | 969 g/l | 969 g/l | 969 g/l | 969 g/l | 969 g/l | 999g/l |
| Flottenaufnahme | 80% | 80% | 80% | 80% | 80% | 80% | 80% | 80% | 80% |
| Trocknung | 2Min120°C | 2 Min 120°C | 2 Min 120°C | 2 Min 120°C | 2 Min 120°C | 2 Min 120°C | 2 Min 120°C | 2 Min 120°C | 2 Min 120°C |
| Kondensation | 2 Min 170°C | 2 Min 170°C | 2 Min 170°C | 2 Min 170°C | 2 Min 170°C | 2 Min 170°C | 2 Min 170°C | 2 Min 170°C | 2 Min 170°C |

**Tabelle 2**

| | Textilmuster Nummer | | | | | | |
|---|---|---|---|---|---|---|---|
| | 1 | 2 | 3 | 4 | 5 | 6 | Blindwert |
| Griff nach Ausrüstung | 100% | 100% | 100% | 100% | 100% | 100% | 0% |
| Griff nach einer Wäsche | 45% | 58% | 55% | 49% | 52% | 43% | 0% |
| Griff nach drei Wäschen | 15% | 43% | 40% | 34% | 39% | 12% | 0% |

| | | | | | | | |
|---|---|---|---|---|---|---|---|
| Griffbewertung in % als relativer Vergleich | | | | | | | |

**Tabelle 3**

| | Textilmuster Nummer | | |
|---|---|---|---|
| | 7 | 8 | Blindwert |
| Griff nach Ausrüstung | 100% | 100% | 0% 15 |
| Griff nach einer Wäsche | 32% | 43% | 0% |
| Griff nach drei Wäschen | 9% | 31% | 0% |

| | | | |
|---|---|---|---|
| Griffbewertung in % als relativer Vergleich | | | |

## Patentansprüche

1. Siloxancopolymere herstellbar indem
(a) in einem ersten Schritt
Organopolysiloxane (1), die pro Molekül mindestens ein Si-gebundenes Wasserstoffatom, vorzugsweise mindestens zwei Si-gebundene Wasserstoffatome, aufweisen, mit weitgehend linearen oligomeren oder polymeren Verbindungen (2) der allgemeinen Formel
R¹-(A-CₙH₂ₙ)ₘ-A¹-H (I),
wobei R¹ einen einwertigen gegebenenfalls substituierten Kohlenwasserstoffrest bedeutet, an den Si-H-Gruppen in einer Hydrosilylierungsreaktion angelagert werden können, vorzugsweise einen aliphatische C-C-Mehrfachbindung aufweisenden Kohlenwasserstoffrest bedeutet,
A einen zweiwertigen, polaren organischen Rest ausgewählt aus der Gruppe von -0- , -C(O)-O-, -O-C(O)-,-O-C(O)-O-, -C(0)-NH- , -NH-C(O)- , Urethanrest und Harnstoffrest, vorzugsweise ein Sauerstoffatom -O-, bedeutet,
A¹ einen zweiwertigen, polaren organischen Rest ausgewählt aus der Gruppe von -0- , -NH- und -NR'-(wobei R' einen einwertigen Kohlenwasserstoffrest mit 1 bis 18 Kohlenstoffatomen bedeutet), vorzugsweise ein Sauerstoffatom -O-, bedeutet,
n eine ganze Zahl von 1 bis 20, vorzugsweise 1 bis 4, bevorzugt 2 oder 3, ist und
m gleich 0 oder eine ganze positive Zahl, vorzugsweise 5 bis 50, ist,
umgesetzt werden,
(b) in einem zweiten Schritt
die so erhaltenen H-A¹-Gruppen aufweisenden Zwischenprodukte (4) mit organischen Verbindungen (5), die pro Molekül mindestens zwei Isocyanatgruppen aufweisen, umgesetzt werden, wobei die Umsetzung in Anwesenheit von weiteren organischen Verbindungen (6)und (7), welche gegenüber Isocyanatgruppen reaktiv sind, stattfindet,
mit der Maßgabe, dass die Verbindungen (6) mindestens eine tertiäre Amingruppe enthalten,
und dass die Verbindungen (7) solche sind, die in einem Temperaturbereich von 50°C bis 250°C, vorzugsweise 100°C bis 200°C, wieder vom Siloxancopolymer abgespalten werden können, wobei wieder freie Isocyanatgruppen im Siloxancopolymer entstehen, und
(c) in einem dritten Schritt
die Amingruppen-haltigen Zwischenprodukte (8) aus Schritt (b) mit einem Alkylierungsmittel (9) teilweise oder vollständig quaterniert werden,
mit der Maßgabe, dass der Wassergehalt der zur Herstellung der Siloxancopolymere eingesetzten Verbindungen (1) und (2) niedriger ist als 2000 Gew.-ppm, vorzugsweise niedriger ist als 1500 Gew.-ppm, bevorzugt niedriger ist als 1000 Gew.-ppm, jeweils bezogen auf das Gesamtgewicht von Verbindungen (1) und (2).

2. Siloxancopolymere nach Anspruch 1, **dadurch gekennzeichnet, dass** die organischen Verbindungen (5), die pro Molekül mindestens zwei Isocyanatgruppen aufweisen, in Mengen von 0,5 bis 1,0 Mol Isocyanatgruppe je Mol der in Summe in den Zwischenprodukten (4) und den organischen Verbindungen (6) und (7) enthaltenen, mit Isocyanatgruppen reaktiven Gruppen eingesetzt werden.

3. Siloxancopolymere nach Anspruch 1 oder 2, **dadurch gekennzeichnet, dass** als Organopolysiloxane (1) solche der allgemeinen Formel
H_{g}R_{3-g}SiO(SiR**₂**O)ₒ(SiRHO)ₚSiR_{3-g}H_{g} (III)
wobei R gleich oder verschieden sein kann und einen einwertigen, gegebenenfalls substituierten Kohlenwasserstoffrest mit 1 bis 18 Kohlenstoffatomen je Rest bedeutet,
g 0, 1 oder 2,
o 0 oder eine ganze Zahl von 1 bis 1500 und
p 0 oder eine ganze Zahl von 1 bis 200 ist,
mit der Maßgabe, dass pro Molekül mindestens ein Si-gebundenes Wasserstoffatom vorliegt,
eingesetzt werden.

4. Siloxancopolymere nach Anspruch 3, **dadurch gekennzeichnet, dass** die Organopolysiloxane (1) α,ω-Dihydrogendiorganopolysiloxane sind.

5. Siloxancopolymere nach einem der Ansprüche 1 bis 4, **dadurch gekennzeichnet, dass** A und A¹ in Formel (I) ein Sauerstoffatom -O- sind.

6. Siloxancopolymere nach einem der Ansprüche 1 bis 5, **dadurch gekennzeichnet, dass** die Verbindung (2) ein Polyether der allgemeinen Formel
H₂C=CH-R²-(OCₙH₂ₙ)ₘ-OH (IV),
wobei R² ein zweiwertiger Kohlenwasserstoffrest mit 1 bis 10 Kohlenstoffatomen ist und
n und m die in Anspruch 1 angegebene Bedeutung haben, ist.

7. Siloxancopolymere nach einem der Ansprüche 1 bis 6, **dadurch gekennzeichnet, dass** die Verbindung (5) ein Diisocyanat der allgemeinen Formel
O=C=N-R³-N=C=O (V),
wobei R³ einen zweiwertigen Kohlenwasserstoffrest mit 4 bis 40 Kohlenstoffatomen je Rest bedeutet,
ist.

8. Siloxancopolymere nach einem der Ansprüche 1 bis 7, **dadurch gekennzeichnet, dass** im zweiten Verfahrensschritt (b) als weitere organische Verbindungen (6) solche ausgewählt aus der Gruppe der Formeln
HX-R⁵-NR⁴₂ (VI),
HX-R⁶(NR⁴₂)₂ (VII),
HX-R⁷(NR⁴₂)₃ (VIII),
(HX)₂R⁶-NR⁴₂ (IX),
HR⁸N-R⁵-NR⁴₂ (X),
wobei R⁴ einen Rest R, der gegebenenfalls Sauerstoff-, Schwefel- oder Stickstoffatome enthalten kann, vorzugsweise einen Methyl-, Ethyl- oder Propylrest, der gegebenenfalls einen Hydroxy- und/oder peralkyliertem Aminrest enthalten kann, bedeutet,
R⁵ einen zweiwertigen Kohlenwasserstoffrest mit 1 bis 100 Kohlenstoffatomen, bevorzugt mit 1 bis 50 Kohlenstoffatomen, insbesondere bevorzugt mit 1 bis 20 Kohlenstoffatomen, der durch Sauerstoff-, Schwefel- oder Stickstoffatome unterbrochen oder substituiert sein kann, bedeutet,
R⁶ einen dreiwertigen organischen Rest mit 1 bis 100 Kohlenstoffatomen je Rest, vorzugsweise einen dreiwertigen Kohlenwasserstoffrest mit 1 bis 100 Kohlenstoffatomen, bevorzugt mit 1 bis 20 Kohlenstoffatomen, insbesondere bevorzugt mit 1 bis 10 Kohlenstoffatomen, der ein oder mehrere Sauerstoffatome enthält, bedeutet,
R⁷ einen vierwertigen organischen Rest mit 1 bis 100 Kohlenstoffatomen je Rest, vorzugsweise einen vierwertigen Kohlenwasserstoffrest mit 1 bis 20 Kohlenstoffatomen, der ein oder mehrere Sauerstoffatome enthält, bedeutet,
R⁸ Wasserstoffatom oder R⁴ bedeutet, und
X die Bedeutung von Sauerstoffatom oder Schwefelatom, vorzugsweise Sauerstoffatom, besitzt,
eingesetzt werden.

9. Siloxancopolymere nach einem der Ansprüche 1 bis 8, **dadurch gekennzeichnet, dass** als Verbindungen (7) Verbindungen vom Typ HB mit einem gegenüber Isocyanaten reaktivem Wasserstoffatom ausgewählt aus der Gruppe von Oxime, Phenole, Lactame, CH-acide Verbindungen wie Malonate, Acetoacetate oder Ketone, Pyrazole, Hydroxamsäuren, sekundäre Monoamine und Hydroxylamine oder Verbindungen vom Typ HBH mit zwei gegenüber Isocyanaten reaktiven Wasserstoffatomen ausgewählt aus der Gruppe von Dioxime, Diphenole und sekundäre Diamine
eingesetzt werden.

10. Siloxancopolymere nach einem der Ansprüche 1 bis 9, **dadurch gekennzeichnet, dass** im dritten Verfahrensschritt (c) als Alkylierungsmittel (9) solches ausgewählt aus der Gruppe von Methylchlorid, Methyljodid, Dodecylbromid, Benzylchlorid, Chloressigsäure, Dimethylsulfat und p-Toluolsulfonsäuremethylesther eingesetzt wird.

11. Verfahren zur Herstellung von Siloxancopolymeren indem
(a) in einem ersten Schritt
Organopolysiloxane (1), die pro Molekül mindestens ein Si-gebundenes Wasserstoffatom, vorzugsweise mindestens zwei Si-gebundene Wasserstoffatome, aufweisen, mit weitgehend linearen oligomeren oder polymeren Verbindungen (2) der allgemeinen Formel
R¹-(^{A}-CₙH₂ₙ)ₘ-A¹-^{H} (I),
wobei R¹ einen einwertigen gegebenenfalls substituierten Kohlenwasserstoffrest bedeutet, an den Si-H-Gruppen in einer Hydrosilylierungsreaktion angelagert werden können, vorzugsweise einen aliphatische C-C-Mehrfachbindung aufweisenden Kohlenwasserstoffrest bedeutet,
A einen zweiwertigen, polaren organischen Rest ausgewählt aus der Gruppe von -0- , -C(O)-O-, -O-C(O)-, -O-C(O)-, -C(O)-NH- , -NH-C(O)- , Urethanrest und Harnstoffrest, vorzugsweise ein Sauerstoffatom -O-, bedeutet,
A¹ einen zweiwertigen, polaren organischen Rest ausgewählt aus der Gruppe von -O- , -NH- und -NR'-(wobei R' einen einwertigen Kohlenwasserstoffrest mit 1 bis 18 Kohlenstoffatomen bedeutet), vorzugsweise ein Sauerstoffatom -O-, bedeutet,
n eine ganze Zahl von 1 bis 20, vorzugsweise 1 bis 4, bevorzugt 2 oder 3, ist und
m gleich 0 oder eine ganze positive Zahl, vorzugsweise 5 bis 50, ist,
umgesetzt werden,
(b) in einem zweiten Schritt
die so erhaltenen H-A¹-Gruppen aufweisenden Zwischenprodukte (4) mit organischen Verbindungen (5), die pro Molekül mindestens zwei Isocyanatgruppen aufweisen, umgesetzt werden, wobei die Umsetzung in Anwesenheit von weiteren organischen Verbindungen (6)und (7), welche gegenüber Isocyanatgruppen reaktiv sind, stattfindet,
mit der Maßgabe, dass die Verbindungen (6) mindestens eine tertiäre Amingruppe enthalten,
und dass die Verbindungen (7) solche sind, die in einem Temperaturbereich von 50°C bis 250°C, vorzugsweise 100°C bis 200°C, wieder vom Siloxancopolymer abgespalten werden können, wobei wieder freie Isocyanatgruppen im Siloxancopolymer entstehen, und
(c) in einem dritten Schritt
die Amingruppen-haltigen Zwischenprodukte (8) aus Schritt (b) mit einem Alkylierungsmittel (9) teilweise oder vollständig quaterniert werden,
mit der Maßgabe, dass der Wassergehalt der zur Herstellung der Siloxancopolymere eingesetzten Verbindungen (1) und (2) niedriger ist als 2000 Gew.-ppm, vorzugsweise niedriger ist als 1500 Gew.-ppm, bevorzugt niedriger ist als 1000 Gew.-ppm, jeweils bezogen auf das Gesamtgewicht von Verbindungen (1) und (2).

12. Emulsionen enthaltend
(A) Siloxancopolymere nach einem der Ansprüche 1 bis 10, und
(B) Wasser.

13. Verfahren zur Herstellung der Emulsionen nach Anspruch 12 durch Vermischen von
(A) Siloxancopolymeren nach einem der Ansprüche 1 bis 10, mit
(B) Wasser.

14. Verfahren zur Behandlung von faserhaltigen Substraten mit Siloxancopolymeren nach einem der Ansprüche 1 bis 10.

## Claims

1. Siloxane copolymers preparable by
(a) a first step of reacting
organopolysiloxanes (1) which have at least one silicon-attached hydrogen atom and preferably two or more silicon-attached hydrogen atoms per molecule with
substantially linear oligomeric or polymeric compounds (2) of the general formula
R¹-(A-CₙH₂ₙ)ₘ-A¹-H (I)
where R¹ is a univalent optionally substituted hydrocarbyl radical capable of adding Si-H groups in a hydrosilylation reaction, preferably a hydrocarbyl radical having an aliphatic carbon-carbon multiple bond,
A is a bivalent polar organic radical selected from the group consisting of -O-, -C(O)-O-, -O-C(O)-, -O-C(O)-O-, -C(O)-NH-, -NH-C(O)-, urethane radical and urea radical, preferably an oxygen atom -O-,
A¹ is a bivalent polar organic radical selected from the group consisting of -0-, -NH- and -NR'-(where R' is a univalent hydrocarbyl radical of 1 to 18 carbon atoms), preferably an oxygen atom -0-,
n is an integer from 1 to 20, preferably from 1 to 4 and more preferably 2 or 3, and
m is zero or a positive integer, preferably from 5 to 50,
(b) a second step of reacting
the resulting H-A¹-containing intermediates (4) with organic compounds (5), which have two or more isocyanate groups per molecule, the reaction taking place in the presence of further organic compounds (6) and (7), which are reactive toward isocyanate groups,
with the proviso that the compounds (6) contain at least one tertiary amine group,
and that the compounds (7) are those which can be redetached again from the siloxane copolymer in a temperature range from 50°C to 250°C, preferably 100°C to 200°C, resulting once more in free isocyanate groups in the siloxane copolymer, and
(c) a third step
of the amino-containing intermediates (8) from step (b) being partially or completely quaternized with an alkylating agent (9),
with the proviso that the water content of the compounds (1) and (2), which are used for preparing the siloxane copolymers, is lower than 2000 weight ppm, preferably lower than 1500 weight ppm and more preferably lower than 1000 weight ppm in each case based on the total weight of compounds (1) and (2).

2. Siloxane copolymers according to Claim 1, **characterized in that** the organic compounds (5), which have two or more isocyanate groups per molecule, are used in amounts of 0.5 to 1.0 mol of isocyanate group per mole of the sum total of isocyanate-reactive groups present in the intermediates (4) and the organic compounds (6) and (7).

3. Siloxane copolymers according to Claim 1 or 2, **characterized in that** said organopolysiloxanes (1) have the general formula
H_{g}R_{3-g}SiO(SiR₂O)ₒ(SiRHO)ₚSiR_{3-g}H_{g} (III)
where R in each occurrence may be the same or different and is a univalent optionally substituted hydrocarbyl radical having 1 to 18 carbon atoms per radical,
g is 0, 1 or 2,
o is 0 or an integer from 1 to 1500, and
p is 0 or an integer from 1 to 200,
with the proviso that there is at least one silicon-attached hydrogen atom per molecule.

4. Siloxane copolymers according to Claim 3, **characterized in that** said organopolysiloxanes (1) are α,ω-dihydrodiorganopolysiloxanes.

5. Siloxane copolymers according to any one of Claims 1 to 4, **characterized in that** A and A¹ in the formula (I) are an oxygen atom -O-.

6. Siloxane copolymers according to any one of Claims 1 to 5, **characterized in that** the compound (2) is a polyether of the general formula
H₂C=CH-R²-(OCₙH₂ₙ)ₘ-OH (IV)
where R² is a bivalent hydrocarbyl radical of 1 to 10 carbon atoms and
n and m are each as defined in Claim 1.

7. Siloxane copolymers according to any one of Claims 1 to 6, **characterized in that** the compound (5) is a diisocyanate of the general formula
O=C=N-R³-N=C=O (V)
where R³ is a bivalent hydrocarbyl radical having 4 to 40 carbon atoms per radical.

8. Siloxane copolymers according to any one of Claims 1 to 7, **characterized in that** the second step (b) utilizes further organic compounds (6) selected from the group of the formulae
HX-R⁵-NR⁴₂ (VI),
HX-R⁶(NR⁴₂) (VII),
HX-R⁷(NR⁴₂)₃ (VIII),
(HX)₂R⁶-NR⁴₂ (IX),
HR⁸N-R⁵-NR⁴₂ (X),
where R⁴ is an R radical which may optionally contain oxygen, sulfur or nitrogen atoms, preferably a methyl, ethyl or propyl radical which may optionally contain a hydroxyl and/or peralkylated amine radical,
R⁵ is a bivalent hydrocarbyl radical of 1 to 100 carbon atoms, preferably of 1 to 50 carbon atoms and more preferably of 1 to 20 carbon atoms which may be interrupted or substituted by oxygen, sulfur or nitrogen atoms,
R⁶ is a tervalent organic radical having 1 to 100 carbon atoms per radical, preferably a tervalent hydrocarbyl radical having 1 to 100 carbon atoms, preferably having 1 to 20 carbon atoms and more preferably having 1 to 10 carbon atoms, which contains one or more oxygen atoms,
R⁷ is a tetravalent organic radical having 1 to 100 carbon atoms per radical, preferably a tetravalent hydrocarbyl radical having 1 to 20 carbon atoms which contains one or more oxygen atoms,
R⁸ is a hydrogen atom or R⁴, and
X is an oxygen atom or a sulfur atom, preferably an oxygen atom.

9. Siloxane copolymers according to any one of Claims 1 to 8, **characterized in that** compounds (7) comprise compounds of the HB type having an isocyanate-reactive hydrogen atom selected from the group consisting of oximes, phenols, lactams, carbon acid compounds such as malonates, acetoacetates or ketones, pyrazoles, hydroxamic acids, secondary monoamines and hydroxylamines, or compounds of the HBH type having two isocyanate-reactive hydrogen atoms selected from the group consisting of dioximes, diphenols and secondary diamines.

10. Siloxane copolymers according to any one of Claims 1 to 9, **characterized in that** the third step (c) utilizes an alkylating agent (9) selected from the group consisting of methyl chloride, methyl iodide, dodecyl bromide, benzyl chloride, chloroacetic acid, dimethyl sulfate and methyl p-toluenesulfonate.

11. Process for preparing siloxane copolymers by
(a) a first step of reacting
organopolysiloxanes (1) which have at least one silicon-attached hydrogen atom and preferably two or more silicon-attached hydrogen atoms per molecule with
substantially linear oligomeric or polymeric compounds (2) of the general formula
R¹- (A-CₙH₂ₙ)ₘ-A¹-H (I)
where R¹ is a univalent optionally substituted hydrocarbyl radical capable of adding Si-H groups in a hydrosilylation reaction, preferably a hydrocarbyl radical having an aliphatic carbon-carbon multiple bond,
A is a bivalent polar organic radical selected from the group consisting of -O-, -C(O)-O-, -O-C(O)-, -O-C(O)-O-, -C(O)-NH-, -NH-C(O)-, urethane radical and urea radical, preferably an oxygen atom -O-,
A¹ is a bivalent polar organic radical selected from the group consisting of -0-, -NH- and -NR'-(where R' is a univalent hydrocarbyl radical of 1 to 18 carbon atoms), preferably an oxygen atom -0-,
n is an integer from 1 to 20, preferably from 1 to 4 and more preferably, 2 or 3 and
m is zero or a positive integer, preferably from 5 to 50
(b) a second step of reacting
the resulting H-A¹-containing intermediates (4) with organic compounds (5), which have two or more isocyanate groups per molecule, the reaction taking place in the presence of further organic compounds (6) and (7), which are reactive toward isocyanate groups,
with the proviso that the compounds (6) contain at least one tertiary amine group,
and that the compounds (7) are those which can be redetached again from the siloxane copolymer in a temperature range from 50°C to 250°C, preferably 100°C to 200°C, resulting once more in free isocyanate groups in the siloxane copolymer, and
(c) a third step
of the amino-containing intermediates (8) from step (b) being partially or completely quaternized with an alkylating agent (9),
with the proviso that the water content of the compounds (1) and (2), which are used for preparing the siloxane copolymers, is lower than 2000 weight ppm, preferably lower than 1500 weight ppm and more preferably lower than 1000 weight ppm in each case based on the total weight of compounds (1) and (2).

12. Emulsions comprising
(A) siloxane copolymers according to any one of Claims 1 to 10, and
(B) water.

13. Process for producing the emulsions according to Claim 12 by mixing of
(A) siloxane copolymers according to any one of Claims 1 to 10, with
(B) water.

14. Process for treating fiber-containing substrates with siloxane copolymers according to any one of Claims 1 to 10.

## Revendications

1. Copolymères de siloxane pouvant être fabriqués par le procédé suivant :
(a) lors d'une première étape,
des organopolysiloxanes (1), qui comprennent par molécule au moins un atome d'hydrogène relié à Si, de préférence au moins deux atomes d'hydrogène reliés à Si, sont mis en réaction avec des composés (2) oligomère ou polymères essentiellement linéaires de formule générale
R¹-(A-CₙH₂ₙ)ₘ-A¹-H (I)
dans laquelle R¹ signifie un radical hydrocarboné monovalent éventuellement substitué, sur lequel des groupes Si-H peuvent être additionnés lors d'une réaction d'hydrosilylation, de préférence un radical hydrocarboné aliphatique comprenant une liaison C-C multiple,
A signifie un radical organique polaire bivalent choisi dans le groupe constitué par -O-, -C(O)-O-, -O-C(O)-, - O-C(O)-O-, -C(O)-NH-, -NH-C(O)-, un radical uréthane et un radical urée, de préférence un atome d'oxygène -O-,
A¹ signifie un radical organique polaire bivalent choisi dans le groupe constitué par -O-, -NH- et -NR'- (R' signifiant un radical hydrocarboné monovalent de 1 à 18 atomes de carbone), de préférence un atome d'oxygène -O-,
n signifie un nombre entier de 1 à 20, de préférence de 1 à 4, avantageusement de 2 ou 3, et
m signifie 0 ou un nombre positif entier, de préférence 5 à 50,
(b) lors d'une deuxième étape,
les produits intermédiaires (4) comprenant des groupes H-A¹ ainsi obtenus sont mis en réaction avec des composés organiques (5), qui comprennent par molécule au moins deux groupes isocyanate, la réaction ayant lieu en présence de composés organiques (6) et (7) supplémentaires qui sont réactifs avec les groupes isocyanate,
à condition que les composés (6) contiennent au moins un groupe amino tertiaire,
et que les composés (7) soient tels qu'ils puissent de nouveau être clivés du copolymère de siloxane dans une plage de température allant de 50°C à 250°C, de préférence de 100°C à 200°C, des groupes isocyanate libres se formant de nouveau dans le copolymère de siloxane, et
(c) lors d'une troisième étape,
les produits intermédiaires (8) contenant des groupes amino de l'étape (b) sont quaternisés en partie ou en totalité avec un agent d'alkylation (9),
à condition que la teneur en eau des composés (1) et (2) utilisés pour la fabrication des copolymères de siloxane soit inférieure à 2 000 ppm en poids, de préférence inférieure à 1 500 ppm en poids, avantageusement inférieure à 1 000 ppm en poids, à chaque fois par rapport au poids total des composés (1) et (2).

2. Copolymères de siloxane selon la revendication 1, **caractérisés en ce que** les composés organiques (5), qui comprennent par molécule au moins deux groupes isocyanate, sont utilisés en quantités de 0,5 à 1,0 mole de groupe isocyanate par mole de groupes réactifs avec les groupes isocyanate contenus au total dans les produits intermédiaires (4) et les composés organiques (6) et (7).

3. Copolymères de siloxane selon la revendication 1 ou 2, **caractérisés en ce que** des organopolysiloxanes de formule générale
H_{g}R_{3-g}SiO(SiR₂O)ₒ(SiRHO)ₚSiR_{3-g}H_{g} (III)
dans laquelle les R peuvent être identiques ou différents et signifient un radical hydrocarboné monovalent, éventuellement substitué, de 1 à 18 atomes de carbone par radical,
g signifie 0, 1 ou 2,
o signifie 0 ou un nombre entier de 1 à 1 500, et
p signifie 0 ou un nombre entier de 1 à 200,
à condition qu'au moins un atome d'hydrogène relié à Si soit présent par molécule,
sont utilisés en tant qu'organopolysiloxanes (1).

4. Copolymères de siloxane selon la revendication 3, **caractérisés en ce que** les organopolysiloxanes (1) sont des α,ω-dihydrogénodiorganopolysiloxanes.

5. Copolymères de siloxane selon l'une quelconque des revendications 1 à 4, **caractérisés en ce qu'**A et A¹ dans la formule (I) sont un atome d'oxygène -O-.

6. Copolymères de siloxane selon l'une quelconque des revendications 1 à 5, **caractérisés en ce que** le composé (2) est un polyéther de formule générale
H₂C=CH-R²-(OCₙH₂ₙ)ₘ-OH (IV)
dans laquelle R² est un radical hydrocarboné bivalent de 1 à 10 atomes de carbone, et
n et m ont la signification indiquée dans la revendication 1.

7. Copolymères de siloxane selon l'une quelconque des revendications 1 à 6, **caractérisés en ce que** le composé (5) est un diisocyanate de formule générale
O=C=N-R³-N=C=O (V)
dans laquelle R³ signifie un radical hydrocarboné bivalent de 4 à 40 atomes de carbone par radical.

8. Copolymères de siloxane selon l'une quelconque des revendications 1 à 7, **caractérisés en ce que**, lors de la deuxième étape de procédé (b), des composés organiques (6) supplémentaires choisis dans le groupe des formules
HX-R⁵-NR⁴₂ (VI),
HX-R⁶(NR⁴₂)₂ (VII),
HX-R⁷(NR⁴₂)₃ (VIII),
(HX)_{2R}⁶-NR⁴₂ (IX),
HR⁸N-R⁵-NR⁴₂ (X)
dans lesquelles R⁴ signifie un radical R qui peut éventuellement contenir des atomes d'oxygène, de soufre ou d'azote, de préférence un radical méthyle, éthyle ou propyle, qui peut éventuellement contenir un radical hydroxy et/ou amino peralkylé,
R⁵ signifie un radical hydrocarboné bivalent de 1 à 100 atomes de carbone, de préférence de 1 à 50 atomes de carbone, de manière particulièrement préférée de 1 à 20 atomes de carbone, qui peut être interrompu ou substitué par des atomes d'oxygène, de soufre ou d'azote,
R⁶ signifie un radical organique trivalent de 1 à 100 atomes de carbone par radical, de préférence un radical hydrocarboné trivalent de 1 à 100 atomes de carbone, avantageusement de 1 à 20 atomes de carbone, de manière particulièrement préférée de 1 à 10 atomes de carbone, qui contient un ou plusieurs atomes d'oxygène,
R⁷ signifie un radical organique tétravalent de 1 à 100 atomes de carbone par radical, de préférence un radical hydrocarboné tétravalent de 1 à 20 atomes de carbone, qui contient un ou plusieurs atomes d'oxygène, R⁸ signifie un atome d'hydrogène ou R⁴, et
X signifie un atome d'oxygène ou un atome de soufre, de préférence un atome d'oxygène,
sont utilisés.

9. Copolymères de siloxane selon l'une quelconque des revendications 1 à 8, **caractérisés en ce qu'**en tant que composés (7), des composés de type HB comprenant un atome d'hydrogène réactif avec les isocyanates, choisis dans le groupe constitué par les oximes, les phénols, les lactames, les composés CH acides tels que les malonates, les acétoacétates ou les cétones, les pyrazoles, les acides hydroxamiques, les monoamines secondaires et les hydroxylamines, ou des composés de type HBH comprenant deux atomes d'hydrogène réactifs avec les isocyanates, choisis dans le groupe constitué par les dioximes, les diphénols et les diamines secondaires, sont utilisés.

10. Copolymères de siloxane selon l'une quelconque des revendications 1 à 9, **caractérisés en ce que**, lors de la troisième étape de procédé (c), des agents d'alkylation (9) choisis dans le groupe constitué par le chlorure de méthyle, l'iodure de méthyle, le bromure de dodécyle, le chlorure de benzyle, l'acide chloroacétique, le sulfate de diméthyle et l'ester méthylique de l'acide p-toluènesulfonique sont utilisés.

11. Procédé de fabrication de copolymères de siloxane selon lequel
(a) lors d'une première étape,
des organopolysiloxanes (1), qui comprennent par molécule au moins un atome d'hydrogène relié à Si, de préférence au moins deux atomes d'hydrogène reliés à Si, sont mis en réaction avec des composés (2) oligomère ou polymères essentiellement linéaires de formule générale
R¹- (A-CₙH₂ₙ)ₘ-A¹-H (I)
dans laquelle R¹ signifie un radical hydrocarboné monovalent éventuellement substitué, sur lequel des groupes Si-H peuvent être additionnés lors d'une réaction d'hydrosilylation, de préférence un radical hydrocarboné aliphatique comprenant une liaison C-C multiple,
A signifie un radical organique polaire bivalent choisi dans le groupe constitué par -O-, -C(O)-O-, -O-C(O)-,-O-C(O)-O-, -C(O)-NH-, -NH-C(O)-, un radical uréthane et un radical urée, de préférence un atome d'oxygène -O-, A¹ signifie un radical organique polaire bivalent choisi dans le groupe constitué par -O-, -NH- et -NR'- (R' signifiant un radical hydrocarboné monovalent de 1 à 18 atomes de carbone), de préférence un atome d'oxygène -O-,
n signifie un nombre entier de 1 à 20, de préférence de 1 à 4, avantageusement 2 ou 3, et
m signifie 0 ou un nombre positif entier, de préférence 5 à 50,
(b) lors d'une deuxième étape,
les produits intermédiaires (4) comprenant des groupes H-A¹ ainsi obtenus sont mis en réaction avec des composés organiques (5), qui comprennent par molécule au moins deux groupes isocyanate, la réaction ayant lieu en présence de composés organiques (6) et (7) supplémentaires qui sont réactifs avec les groupes isocyanate,
à condition que les composés (6) contiennent au moins un groupe amino tertiaire,
et que les composés (7) soient tels qu'ils puissent de nouveau être clivés du copolymère de siloxane dans une plage de température allant de 50°C à 250°C, de préférence de 100°C à 200°C, des groupes isocyanate libres se formant de nouveau dans le copolymère de siloxane, et
(c) lors d'une troisième étape,
les produits intermédiaires (8) contenant des groupes amino de l'étape (b) sont quaternisés en partie ou en totalité avec un agent d'alkylation (9),
à condition que la teneur en eau des composés (1) et (2) utilisés pour la fabrication des copolymères de siloxane soit inférieure à 2 000 ppm en poids, de préférence inférieure à 1 500 ppm en poids, avantageusement inférieure à 1 000 ppm en poids, à chaque fois par rapport au poids total des composés (1) et (2).

12. Émulsions contenant
(A) des copolymères de siloxane selon l'une quelconque des revendications 1 à 10, et
(B) de l'eau.

13. Procédé de fabrication des émulsions selon la revendication 12 par mélange de
(A) des copolymères de siloxane selon l'une quelconque des revendications 1 à 10, avec
(B) de l'eau.

14. Procédé de traitement de substrats fibreux avec des copolymères de siloxane selon l'une quelconque des revendications 1 à 10.
